# DEMANDE DE BREVET EUROPEEN

(11) **EP 1 985 202 A1**
(43) Date de publication de la demande: **29.10.2008**
(21) Numéro de dépôt: 08380041.7
(22) Date de dépôt: 15.02.2008
(51) Int. Cl.: A47B 13/02, F16B 12/52, F16B 12/40

(54) **Bride/collier perfectionnée pour assemblage de structures de meubles**

(30) Priorité: 24.04.2007 ES 200700849 U
(71) Demandeur: Ziur I, S.L., 20720 Azkoitia (Guipuzcoa) (ES)
(72) Inventeur: Astigarraga Jarne, Josu, 20720 Azkoitia (Gipuzkoa) (ES)
(74) Mandataire: Urizar Barandiaran, Miguel Angel

(57) **Abrégé**

Bride/collier perfectionnée pour l'assemblage de structures de meubles, qui se compose de deux pièces-base (1a), (1b) coudées, pouvant être placées face à face de façon conjuguée et pourvues de :
a) moyens pour leur ancrage et leur auto-positionnement mutuel enserrant dans leur conjonction deux éléments, au moins, de la structure d'un meuble ; et
b) jeux de conformations conjuguées dans ces pièces-base (1a), (1b) et dans les éléments de la structure du meuble, qui assurent une fixation rigide amovible entre eux, sous l'action desdits moyens d'ancrage et d'auto-positionnement.

## Description

L'objet de l'invention est une bride/collier perfectionnée pour assemblage de structures de meubles.

Dans l'état actuel de la technique, car on connaît déjà divers meubles, modulaires ou pas, dont le bâti ou l'armature est formé par des montants, des traverses et/ou des pieds assemblés angulairement (orthogonalement) entre eux. L'assemblage entre ces différents éléments de la structure du meuble a lieu en employant des brides ou des colliers du type de celles qui sont décrites, par exemple, dans les Brevets US4621879, US4702638, DE29809994 et EP1120062 (ce dernier du demandeur lui-même).

Un problème non résolu efficacement dans les solutions connues est la rigidité et la polyvalence de l'assemblage : il faut un assemblage très rigide et polyvalent présentant une structuration simple et très maniable, afin d'obtenir des montages/démontages rapides lorsque l'occasion l'exige et, simultanément, offrant de grandes possibilités d'utilisation, ce qui permet de multiples combinaisons/possibilités d'assembler entre eux les éléments qui font partie de la structure du meuble.

La bride-collier, qui fait l'objet de l'invention, permet les fins proposées, en se structurant en deux pièces-base coudées, pouvant être mises face à face de façon conjuguée et pourvues de :
a) moyens pour leur ancrage et leur auto-positionnement mutuel, comprenant dans leur conjonction à, au moins, deux éléments (traverses, montants et/ou pieds) de la structure d'un meuble ;
b) jeux de conformations conjuguées dans ces pièces-base et dans ces éléments de la structure du meuble, qui assurent une fixation rigide amovible entre eux, sous l'action desdits moyens d'ancrage et d'auto-positionnement.

En particulier, ces moyens d'ancrage et d'auto-positionnement entre les pièces-base sont :
a) des jeux de protubérances pourvues d'orifices filetés dans l'une des pièces-base ;
b) des jeux d'orifices passants à l'opposite de ces orifices filetés, sur l'autre pièce-base ;
c) des jeux de vis qui, traversant ces orifices passants et se vissant dans ces orifices filetés, rapprochent les pièces-base entre elles en comprimant entre elle, lors de cette approche, les éléments de la structure du meuble préalablement positionnés dans les conformations correspondantes des pièces-base.

En particulier, ces conformations pour la fixation amovible des éléments de la structure du meuble sont :
a) des jeux de mortaises dans les abords extrêmes des pièces-base, qui comportent des protubérances et des orifices passants, sur lesquels tombent à fond les extrémités correspondantes des éléments de la structure du meuble qui, à cet effet, comportent des jeux de rainure et orifice à l'opposite pour y loger les moyens d'ancrage ;
b) des jeux de sièges aux abords centraux des pièces-base, qui comportent des protubérances et des orifices passants, sièges dans lesquels vient s'ajuster l'élément correspondant de la structure du meuble qui, à cet effet, comporte des orifices-mortaises à l'opposite pour y loger les moyens d'ancrage.

Optionnellement et lorsque les besoins le suggèrent (par exemple, lorsqu'il s'agit d'obtenir la structure d'une table), en rapport avec l'une des arêtes des pièces-base, on dispose un rebord où vient buter l'élément correspondant de la structure du meuble disposé dans cette conjonction.

Pour cela, la bride/collier perfectionnée pour l'assemblage de structures de meubles constitue une invention nouvelle, qui implique une activité inventive et qui est susceptible d'une application industrielle.

Pour mieux comprendre l'objet de la présente invention, on représente sur les plans une forme préférentielle de réalisation pratique, susceptible de changements accessoires qui n'en dénaturent pas le fondement.

La figure 1 représente une vue générale en perspective d'une bride/collier perfectionnée pour l'assemblage de structures de meubles, selon l'objet de l'invention avec ses composants disposés pour le montage -figure 1a - et en position montée, dépourvue de vis (23) -figure 1b -.

Les figures 2a et 2b représentent chacune des vues similaires, respectivement, aux figures 1 a et 1 b précédentes, avec les éléments (e₁), (e₂), (e₃): montants et/ou pieds qui font partie de la structure d'un meuble disposé pour son montage -figure 2a- et montés -figure 2b -.

La figure 3 représente un exemple de réalisation de la structure d'un meuble (par exemple, une table) où les éléments (e₁) sont les pieds, les éléments (e₂) sont les traverses et les éléments (e₃) sont les montants.

La figura 4 représente un exemple de réalisation de la structure d'un meuble (par exemple, un support pour étagères) où l'élément (e₁), (e'₁) est une colonne unique, les éléments (e₂) sont les traverses et les éléments (e₃) sont les montants.

Pour cet exemple de réalisation, le rebord (31 h) sur la pièce-base (1 a) n'est pas nécessaire.

On décrit ci-dessous un exemple de réalisation pratique, non limitative, de la présente invention. D'autres modes de réalisation dans lesquels sont introduits des changements accessoires qui n'en dénaturent pas le fondement, ne sont pas du tout écartés ; au contraire, la présente invention comprend également toutes ses variantes.

Conformément à l'invention, la bride/collier perfectionnée pour l'assemblage de structures de meubles se compose de deux pièces-base (1 a), (1 b) coudées, pouvant être mises à l'opposite de façon conjuguée et pourvues de moyens pour leur ancrage et leur positionnement mutuel.

Dans cette configuration/auto-positionnement, lesdites pièces-base (1a), (1b) enserrent entre elles un ou plusieurs éléments (e₁), (e₂), (e₃) qui font partie de la structure d'un meuble, montants/traverses et pieds s'il s'agit, par exemple, de la structure d'une table ; montants/traverses et colonnes s'il s'agit, par exemple, de la structure d'un support pour étagères

Pour cela, les pièces-base (1a), (1 b) sont munies de jeux de conformations conjuguées, aussi bien sur ces pièces-base (1a), (1 b) que sur ces éléments (e₁), (e₂), (e₃) de la structure du meuble, de façon à assurer une fixation rigide amovible entre eux, sous l'action des moyens d'ancrage et de positionnement mutuel cités ci-dessus.

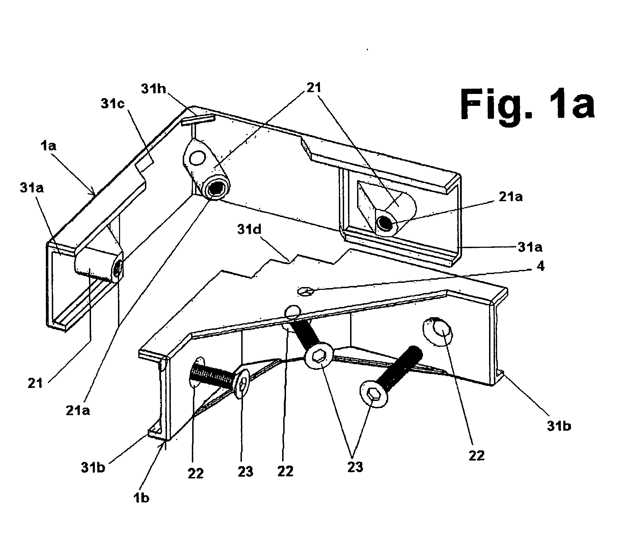

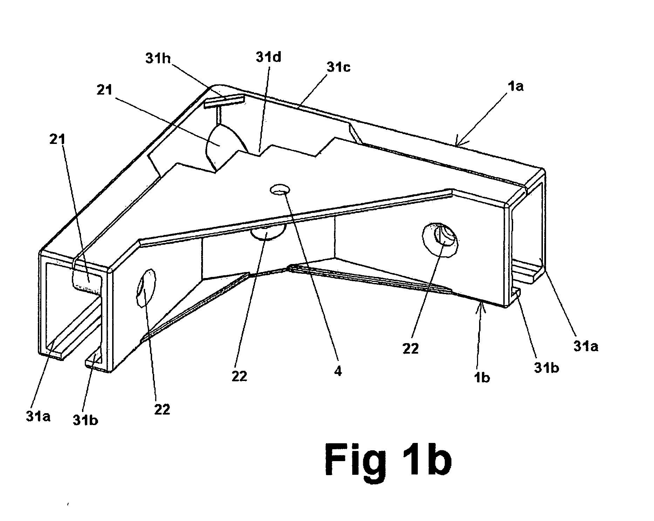

Selon la réalisation représentée, pour configurer ces moyens d'ancrage et d'auto-positionnement entre les pièces-base (1 a), (1 b), une de ces pièces-base (1a) comporte des jeux de protubérances (21) pourvues d'orifices filetés (21a) et l'autre pièce-base (1 b) comporte des jeux d'orifices passants (22) positionnés à l'opposite de ceux-ci, orifices (21 a), (22) dans lesquels on dispose des jeux de vis (23) qui, en traversant ces orifices (22) et se vissant dans ces orifices (21 a), rapprochent les pièce-base (1a), (1 b) entre elles en comprimant entre elles, lors de cette approche, les éléments de la structure du meuble - voir figure 1 -.

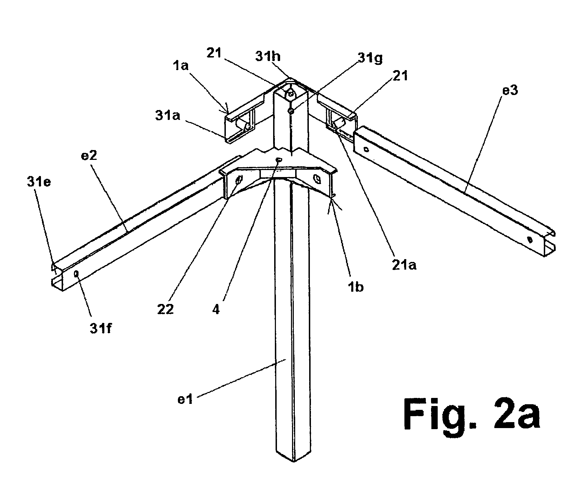

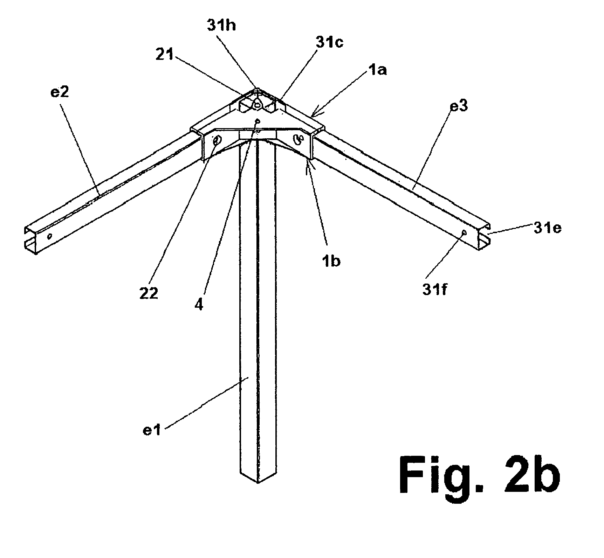

Selon la réalisation représentée, ces conformations en vue d'une fixation amovible des éléments de la structure du meuble sont - voir figure 1 - :
- d'une part, des jeux de mortaises (31 a), (31 b) aux abords extrêmes respectifs des pièces-base (1a), (1b), abords extrêmes sur lesquels viennent buter les extrémités correspondantes des éléments (e₁), (e₂), (e₃) de la structure du meuble qui comportent, à cet effet, des jeux de rainure (31 e) et orifice (31 f) à l'opposite, pour y loger la vis d'ancrage correspondante (23) -voir figure 2 - ;
- d'autre part, des jeux de sièges (31 c), (31 d) dans les abords centraux des pièces-base (1a), (1b), sièges (31 c), (31 d) dans lesquels s'ajuste l'élément (e₁), (e₂), (e₃) correspondant de la structure du meuble qui, à cet effet, comporte des orifices-mortaise (31g) à l'opposite, pour y loger les moyens d'ancrage (2) -voir figure 2 -.

La fixation amovible prétendue est obtenue en comprimant par approche les pièces-base (1a), (1 b) avec les vis (23), avec les éléments (e₁), (e₂), (e₃), préalablement positionnés dans les conformations (31 a), (31 b), (31 c), (31 d) correspondantes des pièces-base (1a), (1 b).

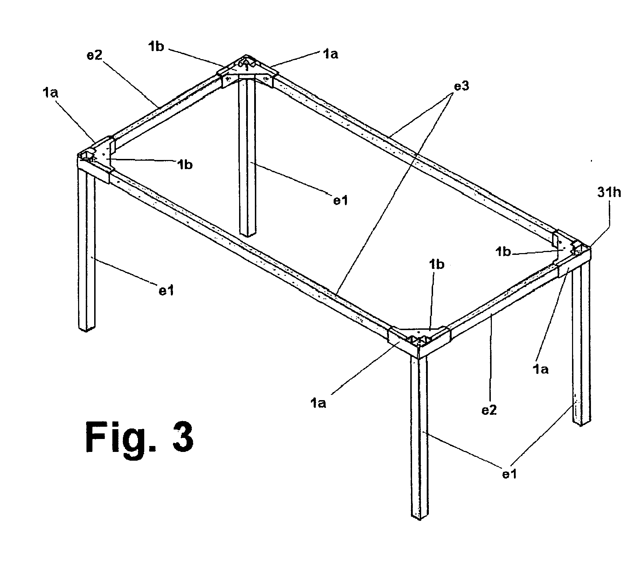

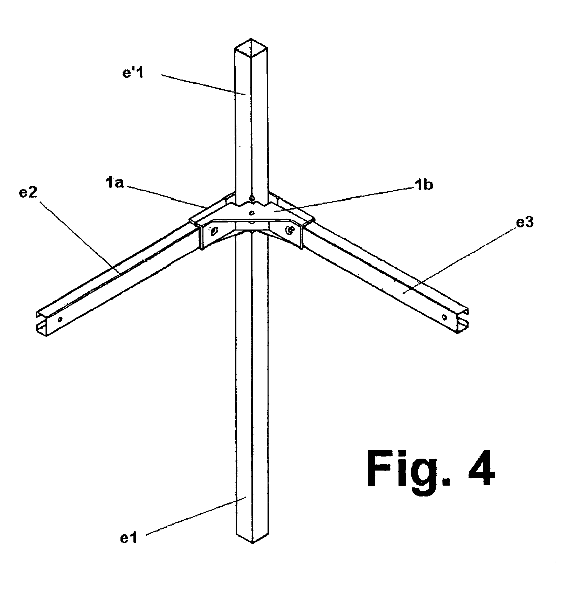

Optionnellement, en rapport avec l'une des arêtes de l'une des pièces-base (1a), on dispose un rebord (31h), sur lequel vient buter l'élément correspondant de la structure du meuble disposé dans cette conjonction. Ce rebord (31 h) n'existe (et il n'est nécessaire) que si l'élément (e₁) correspondant vient buter -comme sur les figures 2a, 2b et 3- pour configurer, par exemple, la structure d'une table, mais il n'est pas nécessaire, lorsque l'élément correspondant traverse la bride/collier -comme sur la figure 4- pour configurer, par exemple, l'armature d'une étagère.

## Revendications

1. Bride/collier perfectionnée pour l'assemblage de structures de meubles, **se caractérisant par le fait qu'**elle se compose de deux pièces-base (1a), (1 b) coudées, pouvant être placées à l'opposite de façon conjuguée et pourvues de :
a) moyens pour leur ancrage et auto-positionnement mutuel, enserrant dans leur conjonction, au moins, deux éléments de la structure d'un meuble ;
b) jeux de conformations conjuguées dans ces pièces-base (1 a), (1 b) et dans ces éléments de la structure du meuble, qui assurent une fixation rigide amovible entre eux, sous l'action desdits moyens d'ancrage et d'auto-positionnement.

2. Bride/collier perfectionnée pour l'assemblage de structures de meubles, selon la revendication antérieure, **se caractérisant par le fait que** ces moyens d'ancrage et d'auto-positionnement entre les pièces-base (1a), (1 b) sont :
a) des jeux de protubérances (21) pourvues d'orifices filetés (21 a) dans l'une des pièces-base (1 a) ;
b) des jeux d'orifices passants (22) à l'opposite de ces orifices filetés (21 a), dans l'autre pièce-base (1 b) ;
c) des jeux de vils (23) qui, en traversant ces orifices (22) et en se vissant dans ces orifices (21 a), rapprochent les pièces-base (1a), (1 b) entre elles, en comprimant entre elles, lors de cette approche, les éléments (e₁), (e₂), (e₃) correspondants de la structure du meuble, préalablement auto-positionnés dans les conformations correspondantes (31 a), (31 b), (31 c), (31 d) des pièces-base (1a), (1 b).

3. Bride/collier perfectionnée pour l'assemblage de structures de meubles, selon les revendications antérieures, **se caractérisant par le fait que** ces conformations pour la fixation amovible des éléments de la structure du meuble sont :
a) des jeux de mortaises (31 a), (31 b) aux abords extrêmes respectifs des pièces-base (1a), (1 b) qui comportent des protubérances (21) et des orifices passants (22), sur lesquels viennent buter les extrémités correspondantes des éléments de la structure du meuble, éléments qui comportent, à cet effet, des jeux de rainure (31e) et orifice (31f) placés à l'opposite pour y loger les moyens d'ancrage (2);
b) des jeux de sièges (31 c), (31 d) aux abords centraux des pièces-base (1a), (1 b), qui comportent des protubérances (21) et des orifices passants (22), dans ces sièges (31 c), (31d) s'ajustant I 'élément correspondant de la structure du meuble qui comporte, à cet effet, des orifices-mortaise (31 g) à l'opposite pour y loger les moyens d'ancrage (2).

4. Bride/collier perfectionnée pour l'assemblage de structures de meubles, selon la troisième revendication, **se caractérisant par le fait qu'**optionnellement, en rapport avec l'une des arêtes de l'une des pièces-base (1a), on dispose un rebord (31 h), sur lequel vient buter l'élément correspondant (e₁) de la structure du meuble disposé dans cette conjonction.

5. Bride/collier perfectionnée pour l'aseemblage de structures de meubles, selon les revendications antérieures, **se caractérisant par le fait qu'**additionnellement l'une des pièces-base (1b) est pourvue de conformations complémentaires, notamment un ou plusieurs orifices passants (4), pour contribuer à la fixation d'autres éléments du meuble lui-même.
